# FASCICULE DE BREVET EUROPEEN

(11) **EP 2 029 992 B1**
(45) Date de publication et mention de la délivrance du brevet: **23.09.2009**
(21) Numéro de dépôt: 07765310.3
(22) Date de dépôt: 01.06.2007
(51) Int. Cl.: G01L 13/02

(54) **DETECTEUR DE RAPPORT DE PRESSIONS ABSOLUES**
DETEKTOR FÜR ABSOLUTDRUCKVERHÄLTNIS
ABSOLUTE PRESSURE RATIO DETECTOR

(30) Priorité: 01.06.2006 FR 0604879
(43) Date de publication de la demande: 04.03.2009
(73) Titulaire: Equip'aero Technique SAS, 32600 L'Isle-Jourdain (FR)
(72) Inventeur: THULLIEZ, Jean-Pierre, 31480 Caubiac (FR)
(74) Mandataire: Ravina, Bernard
(86) Numéro de dépôt international: PCT/EP2007/055421
(87) Numéro de publication internationale: WO 2007/138115

(56) Documents cités:
- EP-A1- 0 056 913
- JP-A- 57 189 036
- SU-A1- 1 241 076
- US-A- 3 894 435

## Description

### Domaine technique

La présente invention concerne un détecteur de rapport de pressions absolues. Elle s'applique, en particulier, au déclenchement d'un actionneur en fonction de ce rapport, lequel par exemple est établi entre une pression de valeur constante et faible et une pression de valeur variable et importante en regard de la précédente.

### Etat de la technique

On connaît de nombreux types de capteur de pressions relatives et absolues.

Le document US 4 393 714 présente un capteur de pression différentiel qui comporte un capteur de déplacement capacitif à l'intérieur d'un boîtier. Un diaphragme monté sur un soufflet est soumis, d'un côté, à une pression P2 et, de l'autre côté, à une pression P1, et une électrode servant à mesurer la capacité est déplacée en fonction de la différence de pression. Ce capteur ne peut capter une pression absolue.

Le document US 4 218 925 décrit un transmetteur de signal représentant une pression différentielle avec une protection de capteur de pression. II comporte une paire de diaphragmes et une paire de soufflets internes entre les diaphragmes. Deux espaces reliés aux diaphragmes sont mis sous deux pressions différentes par deux fluides. Un conduit de fluide incompressible relie le premier espace à une première chambre d'un capteur de pression. Une conduite de fluide incompressible relie le second espace à une deuxième chambre du capteur de pression. Les deux fluides incompressibles agissent sur deux faces opposées du capteur de pression. Les soufflets sont mis sous pression par les deux fluides incompressibles et servent à absorber un excès de pression qui pourrait endommager le capteur de pression. Ce transmetteur de signal n'est pas adapté à mesurer une pression absolue.

La demande de brevet JP 57 189036 montre un détecteur comprenant deux soufflets opposés de diamètres différents, en relation de communication avec une chambre étanche formée dans un corps approprié. Les deux soufflets sont équipés chacun d'une paroi terminale étanche et les deux parois étanches sont jointes l'une à l'autre par une tige rigide de manoeuvre interne aux deux soufflets et à la chambre étanche. Dans cette chambre étanche est formé un vide d'air. Le premier soufflet de diamètre plus faible est logé dans une deuxième chambre étanche recevant une première pression, tandis que le second soufflet de diamètre plus important est logé dans une troisième chambre étanche, recevant une seconde pression. Un commutateur électrique, logé dans la première chambre est actionné par un levier actionné lui même par un épaulement de la tige manoeuvré.

Le brevet US 3 894 435 montre un capteur de pression comprenant une première membrane dont une des faces est soumises à la pression atmosphérique. L'autre face de la membrane délimite avec un corps médian et un soufflet d'étanchéité, une chambre à basse pression en relation de communication avec une autre chambre à basse pression elle même en relation de communication avec le collecteur d'un moteur. Cette dernière chambre à basse pression est délimitée par une seconde membrane et un premier corps dans lequel est engagée une tubulure en relation de communication avec le collecteur. Une chambre médiane soumise à un vide est délimitée entre cette seconde membrane, un corps médian et le soufflet. Dans cette dernière chambre est disposé un bras flexible associé à une jauge de contrainte connectée électriquement à un circuit de contrôle externe à cette chambre. Ce bras flexible est lié mécaniquement par une corde à piano à la seconde membrane. Par ailleurs la première membrane par l'intermédiaire d'une vis de réglage et de la paroi terminale du soufflet agit en poussée sur le bras flexible, le soufflet constituant une manche d'étanchéité autour de la vis. Ce capteur de pression, en combinaison avec le circuit de contrôle permet d'ajuster un rapport air/carburant de façon que ce dernier soit maintenu à un niveau optimal et ce quel que soit la valeur de la pression atmosphérique.

Les deux documents précédents enseignent tous deux la présence de moyens électriques dans la chambre soumise au vide et la connexion de ces moyens, via des lignes électriques, à des circuits électriques externes à ladite chambre. Cette disposition qui exige la traversée de l'une des parois de cette chambre peut se traduire par des pertes d'étanchéité. Ainsi cette chambre, à terme, va se trouver soumise à la pression atmosphérique. Il en résultera des erreurs de mesure et/ou de calcul préjudiciables au bon fonctionnement de l'organe moteur ou autre associé à ce détecteur.

Le document JP 57 189036 enseigne l'usage de deux soufflets reliés par une tige d'actionnement interne à un volume sous vide, ces soufflets étant de diamètres différents. Le document US 3 894 435 enseigne l'usage de deux membranes pour actionner un élément interne disposé dans une chambre sous vide. L'homme du métier connaît les avantages respectifs du soufflet et de la membrane. Il sait notamment qu'à même résistance à la pression et à même diamètre, un soufflet peut se déployer selon une distance bien plus importante que la distance selon laquelle la membrane peut se déformer. En corollaire un soufflet ne présente aucune rigidité transverse et ne peut assurer un guidage en translation alors que la membrane présente une bonne rigidité transverse. En raison de l'incompatibilité entre ces caractéristiques, l'homme du métier à toujours été détourné, d'une solution prévoyant l'usage conjoint d'un soufflet et d'une membrane.

L'absence de rigidité transverse d'une option mettant en oeuvre deux soufflets devant assurer le guidage en translation d'un élément déplaçable, peut être compensée par l'emploi d'un organe de guidage spécifique tels qu'un palier de guidage coopérant avec l'élément déplaçable. Une telle solution quoique simple présente l'inconvénient de générer des forces de frottement pouvant modifier le seuil de détection. Ces forces de frottement peuvent aussi être à l'origine de phénomènes d'hystérésis. Or s'agissant de certaines applications aucune dérive du seuil de détection n'est admissible sous peine de perturber fortement le fonctionnement de l'organe associé à ce détecteur. De plus, la présence d'un palier de guidage se traduit par une élévation du poids de l'ensemble et par une maintenance accrue ce qui pour des applications dans le domaine aéronautique, est à éviter.

Une solution mettant en oeuvre deux membranes est envisageable lorsque les valeurs de pressions en présence sont relativement proches l'une de l'autre. En revanche, lorsque les valeurs pressions sont éloignées l'une de l'autre par exemple d'un facteur de 5 à 10, et que ces membranes agissent sur un même élément mobile l'une devra présenter un diamètre de deux à trois fois plus important que l'autre. Une telle solution peut convenir si l'encombrement n'est pas un facteur important. En revanche si l'environnement dans lequel doit être introduit le détecteur est particulièrement exigu, cette solution ne peut être adoptée. Un tel environnement peut être celui d'un moteur d'un avion.

Pour cette raison l'homme du métier préférera adopter une solution mettant en oeuvre des soufflets équipés d'un palier de guidage malgré les inconvénients attachés à cette solution.

### Divulgation de l'invention

La présente invention vise à remédier à ces inconvénients en proposant une solution qui va à l'encontre des préjugés de l'homme du métier.

A cet effet, la présente invention vise, selon un premier aspect, un détecteur de rapport de pressions absolues comportant un boîtier, **caractérisé en ce qu**'il comporte une pièce d'interface mobile longitudinalement et reliée, à l'une de ses extrémités, à une membrane reliée, par ailleurs, au boîtier, la pièce d'interface mobile étant reliée, à l'autre des extrémités, à un soufflet relié, par ailleurs, par l'une de ses extrémité audit boîtier, ledit soufflet par son volume interne étant soumis à une première pression et ladite membrane par l'une de ses deux faces étant soumise à une seconde pression, et en ce que la pièce d'interface et le soufflet sont entourés de vide dans un espace défini par le boîtier, la pièce d'interface, la membrane, et le soufflet.

Selon une autre caractéristique de l'invention, le boîtier comprend un logement interne dans lequel sont montés, le soufflet, la pièce d'interface et la membrane, que le soufflet par l'une de ses extrémités est fixé à l'une des faces de ce logement, que ledit soufflet par son autre extrémité est fixé de manière étanche à la pièce d'interface, que cette dite extrémité du soufflet est obturée de manière étanche par la pièce d'interface, que la membrane est fixée de manière étanche à l'une des autres faces de logement par sa bordure externe, que la dite membrane, par sa bordure interne, est fixée de manière étanche à la pièce d'interface, l'espace dans lequel est formé le vide étant défini par le logement interne du boîtier, le soufflet, la pièce d'interface et la membrane.

La valeur de la première pression peut varier et la valeur de la seconde pression peut varier.

Selon une autre caractéristique de l'invention la valeur de la première pression est supérieure à la valeur de la seconde pression.

Grâce au maintien du vide autour de la pièce d'interface mobile et du soufflet, le détecteur peut mesurer une pression absolue.

De plus, la mise en oeuvre de la membrane et du soufflet assure une stabilité et une résistance mécaniques accrues par rapports à d'autres architectures. En particulier, l'utilisation du soufflet rend la liaison entre le corps et la pièce d'interface plus résistante aux cycles de fatigue et le couplage d'un soufflet avec une membrane rend le système mécaniquement plus stable et donc moins sensible aux vibrations et chocs mécaniques, et ceci quels que soient les axes de sollicitation. Le détecteur de rapport de pressions absolues objet de la présente invention présente aussi une fiabilité accrue, par rapport à des capteurs dans lesquels se produisent des frottements mécaniques.

Cette fiabilité vient notamment du fait que la membrane assure un guidage en translation précis de l'élément mobile ce qui évite l'emploi d'un palier, source de frottements mécaniques. La membrane présente un diamètre plus important que celui du soufflet et une possibilité de déformation élastique compatible avec la course maximale de la pièce d'interface.

II y a lieu de noter que la chambre dans laquelle est formée un vide ne contient aucun composant, contrairement à l'enseignement de l'état de la technique.

Selon des caractéristiques particulières, la seconde pression est la pression atmosphérique.

Selon des caractéristiques particulières, le détecteur est disposé dans le logement interne formé dans un corps de protection, ce logement interne étant soumis à la seconde pression.

Selon des caractéristiques particulières, un organe élastique est disposé dans le volume interne du soufflet, en compression entre la pièce d'interface et un élément fixe par rapport au boîtier du détecteur, la force exercée par l'organe élastique permettant de limiter la dérive du seuil du détecteur, en particulier pour des fonctionnements en altitude.

Selon des caractéristiques particulières, des cales de réglage sont interposées entre l'organe élastique et l'élément fixe.

Selon des caractéristiques particulières, l'élément fixe précité est le corps de protection.

Selon des caractéristiques particulières, le corps de protection présente un embout interne engagé dans le soufflet, cet embout interne présentant un canal interne traversant dans lequel règne la première pression, ledit canal étant en relation avec le volume interne du soufflet.

Selon des caractéristiques particulières, la pièce d'interface présente un logement interne borgne tourné vers le logement interne du corps de protection et une collerette annulaire à laquelle est fixée de manière étanche la bordure interne de la membrane.

Selon des caractéristiques particulières, le détecteur tel que succinctement exposé ci-dessus est muni d'un actionneur déclenché en fonction de la position de la pièce d'interface.

Selon des caractéristiques particulières, ledit actionneur est un clapet.

Selon des caractéristiques particulières, le clapet comprend un siège formé dans un corps de siège fixé au corps de protection et un élément d'obturation monté dans le logement cylindrique borgne de la pièce d'interface entre un épaulement formé dans ce dernier et une butée annulaire.

Selon des caractéristiques particulières, l'élément d'obturation est monté dans le corps tubulaire avec un jeu axial et est sollicité vers la butée annulaire par un organe élastique.

### Brève description des dessins

D'autres avantages, buts et caractéristiques de la présente invention ressortiront de la description qui va suivre, faite, dans un but explicatif et nullement limitatif en regard des dessins annexés dans lesquels :

la figure 1 représente, en élévation, un mode de réalisation particulier d'un détecteur de rapport de pressions absolues objet de la présente invention,

la figure 2 représente, en section, le mode de réalisation particulier du détecteur de rapport de pressions absolues objet de la présente invention illustré en figure 1,

la figure 3 représente, en vue de dessus, le mode de réalisation particulier du détecteur de rapport de pressions absolues objet de la présente invention illustré en figures 1 et 2,

la figure 4 représente, en vue en section, un soufflet illustré en figures 1 à 3 et,

la figure 5 représente, en section, un autre mode de réalisation particulier du détecteur de rapport de pressions absolues objet de la présente invention, muni et commandant un clapet pneumatique.

### Meilleur mode de réalisation de l'invention

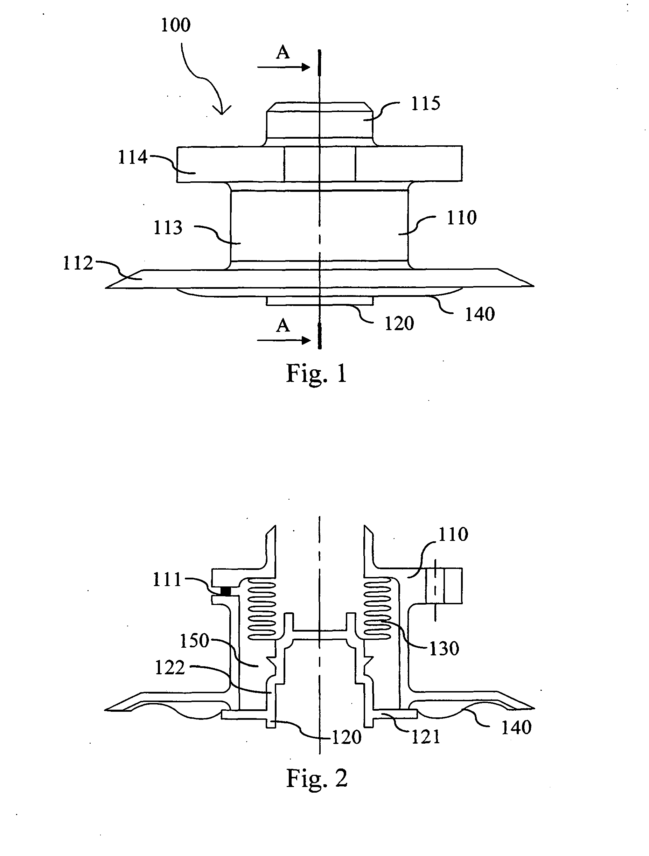

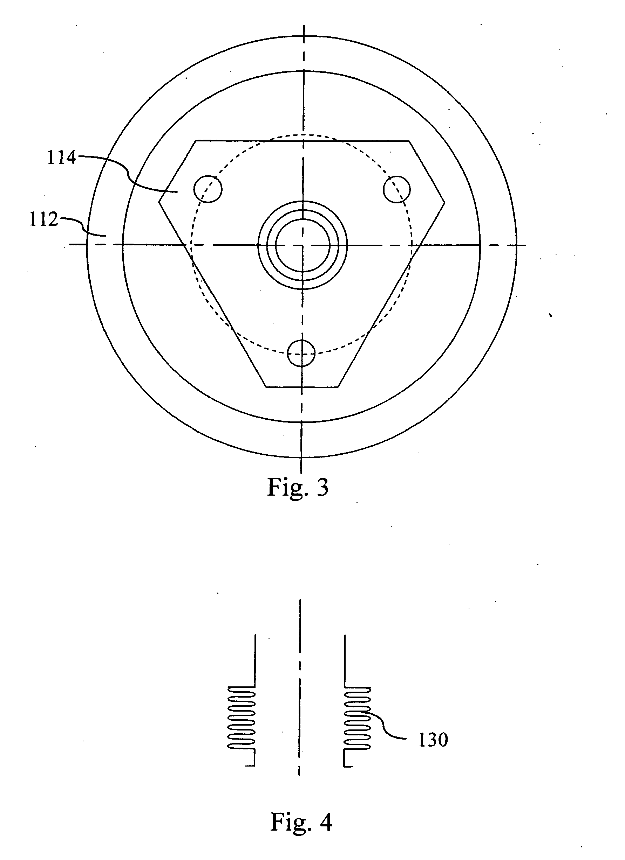

Le détecteur 100 de rapport de pressions absolues représenté dans les figures 1 à 3 est sensiblement à l'échelle 2. On observe que ce détecteur 100 est disposé dans un logement interne formé dans un corps de protection 200, comprenant une première partie et une seconde partie, ces dernières étant jointes l'une à l'autre avec interposition de joints d'étanchéité pour assurer l'étanchéité du logement interne de corps 200.

Le détecteur comporte un boîtier 110 comprenant un logement interne traversant dans lequel sont montés de manière mobile une pièce d'interface 120, un soufflet 130 et une membrane 140. La pièce d'interface 120 est solidarisée de manière étanche d'une part au soufflet 130 et d'autre part à la membrane 140. Le soufflet 130 et la membrane 140 sont solidaires du boîtier 110.

Le logement interne du boîtier 110 comprend une première partie de logement de forme cylindrique en relation de communication avec une seconde partie de logement également de forme cylindrique de plus grand diamètre. Le soufflet 130 est monté dans cette première partie de logement cylindrique et est fixé par sa partie supérieure à la paroi du dit logement. Le soufflet peut se déployer et se contracter dans la première partie de logement et ce selon l'axe central de symétrie AA' de ladite première partie de logement. La pièce d'interface 120 est engagée librement pour partie dans la première partie de logement et pour partie dans la seconde partie de logement. La membrane est fixée à la bordure que présente la seconde partie de logement. La pièce d'interface est amenée à se déplacer selon l'axe AA' précité.

Un espace interne 150 au boîtier 110 est défini par la face interne de la première partie de logement du boîtier 110, la paroi externe latérale de la pièce d'interface 120, par la face externe du soufflet 130 et la face supérieure de la membrane 140. Cet espace 150 est mis au vide par l'intermédiaire d'une ouverture latérale 111 du boîtier 110, cette ouverture 111 étant ensuite scellée hermétiquement. Cet espace 150 est maintenu au vide par l'étanchéité des composants qui le définissent.

Le volume interne que définissent la face interne du soufflet 130 et la pièce d'interface 120 est soumis à une première pression tandis que les faces de la membrane 140 et de la pièce d'interface 120, externes au logement 105 sont soumises à une seconde pression de valeur inférieure à la valeur de la première pression. Le rapport maximum entre les première et seconde pressions est de l'ordre de dix. Ces première et deuxième pressions peuvent varier. L'aire de la projection normale de la surface sur laquelle s'exerce la première pression est inférieure à l'aire de la projection normale de la surface sur laquelle s'exerce la seconde pression, le rapport entre ces deux aires est d'environ un pour six. Par projection normale il faut entendre une projection orthogonale sur un plan géométrique perpendiculaire à l'axe AA'.

Le boîtier 110 présente un corps cylindrique 113 surmonté d'une tête 114 par laquelle il est fixé de manière étanche au corps de protection 200 dans le volume interne de ce dernier. La tête 114 est dotée d'un emmanchement 115. Par cet emmanchement 115 le boîtier 110 est engagé dans un lamage formé dans le corps de protection 200 et ce autour d'un embout interne 210 du corps de protection. Cet embout interne 210 présente un canal interne traversant dans lequel règne la première pression. L'embout interne 210 est axialement engagé dans le volume interne que définit le soufflet 130, le canal traversant que présente l'embout 210 étant en relation de communication avec le volume interne dudit soufflet 130.

Le boîtier présente également une embase 112 enracinée au corps cylindrique 113, de plus grand diamètre que celui du dit corps 113. La première partie de logement est formée dans le corps cylindrique 113 tandis que la seconde partie de logement est formée dans l'embase 112.

La membrane 140 est en forme de couronne circulaire incurvée pour faciliter sa déformation. Par sa bordure interne, la membrane 140 est fixée de manière étanche à la pièce d'interface 120 tandis que par sa bordure externe elle est fixée de manière étanche à l'embase 112 que présente le boîtier 110.

Le soufflet 130 présente ici sept ondulations et est en acier inoxydable. Sa partie supérieure est soudée de manière étanche à l'emmanchement 115 du boîtier 110.

La pièce d'interface 120, substantiellement de forme cylindrique, présente un logement interne borgne 122 tourné vers le logement interne du corps de protection 200. La pièce d'interface 120 est par ailleurs dotée d'une collerette annulaire 121 de plus grand diamètre que le diamètre de la première partie de logement du boîtier 110. La bordure interne de la membrane 140 est fixée de manière étanche à la collerette annulaire 121. La partie inférieure du soufflet 130 est soudée de manière étanche à un épaulement que présente la forme cylindrique de la pièce d'interface 120. Au-dessus de cet épaulement, la pièce d'interface 120 est de forme tronconique afin d'écarter le risque de frottement du soufflet 130 contre ladite pièce 120.

La pièce d'interface 120 est mobile longitudinalement selon l'axe AA' dans le corps 110 d'une part sous l'effet des pressions qui lui sont appliquées et qui sont appliquées sur le soufflet et la membrane et d'autre part sous l'effet de la force de rappel exercée par le soufflet 130 et, dans une moindre mesure, par la membrane 140.

Ces forces de rappel étant sensiblement proportionnelles au déplacement de la pièce d'interface 120, le déplacement de la pièce d'interface 120 est directement fonction du rapport des première et deuxième pressions.

Dans le volume interne du soufflet 130 entre un épaulement que présente l'embout 210 du corps de protection 200 et la pièce d'interface 120, est disposé en compression un organe élastique 131 constitué par exemple par un ressort à spires non jointives. La force exercée par le ressort 131 sur la pièce interface 120 limite les dérives de seuil de détection, en particulier pour des fonctionnements en altitude. Un réglage pourra être opéré en intercalant des cales 132, d'épaisseurs appropriées, entre l'épaulement de l'embout 210 et le ressort à spires 131.

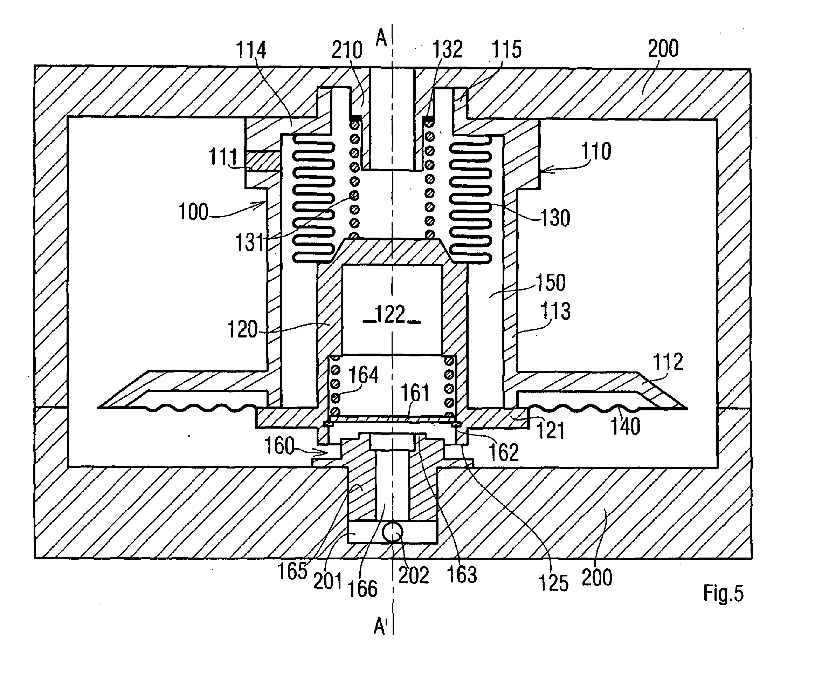

Comme illustré en figure 5, le détecteur de rapport de pressions absolues peut être muni d'un moyen d'actionnement, ou actionneur, ici un clapet pneumatique 160. Dans ce cas, lorsque la valeur du rapport de pression détecté par le détecteur franchi une valeur de seuil prédéterminée, le clapet pneumatique 160 s'ouvre ou se referme. Ce clapet peut occuper une position extrême ouverte, une position extrême fermée et des positions intermédiaires entre ces deux positions extrêmes et ce en fonction de la valeur du rapport entre la première pression et la seconde pression.

Comme on peut le voir sur cette figure, ce clapet 160 comprend un siège 163 formé dans un corps de siège 165 et un élément d'obturation 161 monté dans le logement cylindrique borgne 122 de la pièce d'interface 120 entre un épaulement de ce logement 122 et une butée annulaire 162, interne au logement 122, constituée de préférence par un anneau élastique fendu engagé dans une gorge pratiquée dans la pièce d'interface 120.

Le corps 165 de siège de clapet présente un alésage axial traversant 166 et est monté de manière étanche dans un logement borgne 201 formé dans l'une des parois du corps de protection 200 et plus précisément dans l'une des parois de la seconde partie du corps de protection 200, ce logement borgne 201 étant en relation de communication d'une part avec l'alésage axial 166 et en relation de communication avec un second perçage 202 d'autre part, formé dans une paroi du corps 200 et plus précisément dans une des parois de la seconde partie de corps 200, ledit perçage 202 débouchant sur l'une des faces externes du corps de protection 200. Ainsi lorsque le clapet est ouvert, le logement formé dans le corps de protection 200, ce logement étant soumis à la seconde pression, communique avec l'environnement externe au corps de protection par l'intermédiaire de l'alésage 166, du logement borgne 201 et du perçage 202, tandis que lorsque le clapet 160 est fermé, le logement interne du corps de protection est isolé hermétiquement de l'environnement externe.

Le corps de siège 165 de clapet forme une saillie dans le logement interne du corps de protection 200.

L'élément d'obturation 161 se présente sous la forme d'un disque, se développant par ses grandes faces planes de manière perpendiculaire à l'axe géométrique AA'. En position d'obturation il est appliqué contre le siège 163 du clapet 160.

Préférentiellement, en position d'obturation du siège 163 du clapet, la pièce d'interface 120 vient en appui par l'intermédiaire d'une surface de butée terminale 125, sous forme de couronne, contre le corps de siège 165.

Avantageusement, pour éviter qu'une partie de l'effort de fermeture du clapet 160 ne soit absorbé par le siège 163 et l'élément d'obturation 161, ce dernier est monté dans le logement 122 avec un jeu axial selon l'axe AA' et est sollicité vers la butée annulaire 162 par un organe élastique 164 constitué de préférence par un ressort à spires non jointives. Une telle disposition de montage permet de limiter la force d'application de l'élément d'obturation 161 contre le siège 163, la valeur de ladite force étant essentiellement déterminée par les caractéristiques de l'organe élastique 164. De plus, grâce à cette disposition sont écartés les risques de matage du siège 163 et les pertes d'étanchéité en résultant.

En position d'ouverture totale du clapet 160, la pièce interface 120 par la collerette annulaire 121 vient en butée contre une surface annulaire du boîtier 110.

En position d'ouverture totale ou partielle du clapet 160 l'air contenu dans le logement interne du corps de protection 200 s'échappe vers l'extérieur de ce logement par passage au travers de l'alésage 166, du logement borgne 201 et du perçage 202 ce qui entraîne une chute de pression. Cette chute de pression est utilisée pour la commande d'un organe associé au détecteur. ,

## Revendications

1. Détecteur de rapport de pressions absolues comportant un boîtier (110), **caractérisé en ce qu'**il comporte une pièce d'interface (120) mobile longitudinalement et reliée, à l'une de ses extrémités, à une membrane (140) reliée, par ailleurs, par l'une de ses extrémités au boîtier, la pièce d'interface mobile étant reliée, à l'autre des extrémités, à un soufflet (130) relié, par ailleurs, audit boîtier, ledit soufflet (130) par son volume interne étant soumis à une première pression et ladite membrane (140) par l'une de ses faces étant soumise à une seconde pression, et **en ce que** la pièce d'interface (120) et le soufflet (130) sont entourés de vide dans un espace (150) défini par le boîtier (110), la pièce d'interface(120), la membrane (140) et ledit soufflet (130).

2. Détecteur selon la revendication 1, **caractérisé en ce que** le boîtier (110) comprend un logement interne dans lequel sont montés, le soufflet (130), la pièce d'interface (120) et la membrane (140), que le soufflet (130) par l'une de ses extrémités est fixé à l'une des faces de ce logement, que ledit soufflet (130) par son autre extrémité est fixé de manière étanche à la pièce d'interface (120), que cette dite extrémité du soufflet est obturée de manière étanche par la pièce d'interface (120), que la membrane (140) est fixée de manière étanche à l'une des autres faces de logement par sa bordure externe, que la dite membrane (140), par sa bordure interne, est fixée de manière étanche à la pièce d'interface (120), l'espace (150) dans lequel est formé le vide étant défini par le logement interne du boîtier (110), le soufflet (130), la pièce d'interface (120) et la membrane (140).

3. Détecteur selon la revendication 1 ou la revendication 2, **caractérisé en ce qu'**il est adapté pour être disposé dans le logement interne formé dans un corps de protection (200), ce logement interne étant soumis à la seconde pression.

4. Détecteur selon l'une quelconque des revendications précédentes, **caractérisé par** un organe élastique (131) disposé dans le volume interne du soufflet (130), en compression entre la pièce d'interface (120) et un élément fixe par rapport au boîtier (110), la force exercée par l'organe élastique (131) limitant les dérives de seuil de détection, en altitude.

5. Détecteur selon la revendication 4, **caractérisé par** des cales de réglage (132) interposées entre l'organe élastique (131) et l'élément fixe.

6. Détecteur selon la revendication 3 en combination avec la revendication 4 ou la revendication 5, **caractérisé en ce que** l'élément fixe est le corps de protection (200).

7. Détecteur selon l'une quelconque des revendications 3 à 6, **caractérisé en ce que** le corps de protection (200) présente un embout interne (210) engagé dans le soufflet (130), cet embout interne (210) présentant un canal interne traversant dans lequel règne la première pression, ledit canal étant en relation avec le volume interne du soufflet (130) et le boîtier (110) étant fixé de manière étanche autour de l'embout (210) par une tête (114).

8. Détecteur selon l'une quelconque des revendications précédentes en combinaison avec la revendication 3, **caractérisé en ce que** la pièce d'interface (120) présente un logement interne borgne (122) tourné vers le logement interne du corps de protection (200) et une collerette annulaire (121) à laquelle est fixée de manière étanche la bordure interne de la membrane (140), ladite membrane étant fixée de manière étanche, par sa bordure externe à une embase (112) du boîtier (110).

9. Détecteur selon l'une quelconque des revendications précédentes, **caractérisé en ce que** la membrane (140) présente un diamètre externe supérieur au diamètre du soufflet (130).

10. Détecteur selon l'une quelconque des revendications précédentes, **caractérisé en ce qu'**il est muni d'un actionneur (160) déclenché en fonction de la position de la pièce d'interface (120).

11. Détecteur selon la revendication 10, **caractérisé en ce que** ledit actionneur (160) est un clapet.

12. Détecteur selon les revendications 3 et 11, **caractérisé en ce que** le clapet (160) comprend un siège (163) formé dans un corps (165) de siège monté de manière étanche dans un logement (201) formé dans une des parois du corps de protection (200) et un élément d'obturation (161) monté dans le logement cylindrique borgne (122) de la pièce d'interface (120) entre un épaulement de ce dernier et une butée annulaire (162) interne au logement (122) que le corps (165) de siège de clapet présente un alésage axial traversant (166) et que le logement borgne (201) est en relation de communication d'une part avec l'alésage axial (166) et en relation de communication avec un second perçage (202) d'autre part, formé dans l'une des parois du corps(200)et débouchant sur l'une des faces externes de cette dernière.

13. Détecteur selon la revendication 12, **caractérisé en ce que** l'élément d'obturation (161) est monté dans le logement (122) de la pièce interface (120) avec un jeu axial selon l'axe (AA') et est sollicité vers la butée annulaire (162) par un organe élastique (164).

14. Détecteur selon l'une quelconque des revendications précédente en combinaison avec la revendication 3, **caractérisé en ce que** la seconde pression est la pression atmosphérique.

## Claims

1. An absolute-pressure ratio detector comprising a casing (110), **characterised in that** it comprises an interface piece (120) able to move longitudinally and connected, at one of its ends, to a membrane (140) also connected by one of its ends to the casing, the movable interface piece being connected, at the other end, to a bellows (130) also connected to said casing, said bellows (130), through its internal volume, being subjected to a first pressure and said membrane (140), through one of its faces, being subjected to a second pressure, and **in that** the interface piece (120) and the bellows (130) are surrounded by vacuum in a space (150) defined by the casing (110), the interface piece (120), the membrane (140) and said bellows (130).

2. A detector according to claim 1, **characterised in that** the casing (110) comprises an internal housing in which there are mounted the bellows (130), the interface piece (120) and the membrane (140), **in that** the bellows (130), by one of its ends, is fixed to one of the faces of this housing, **in that** said bellows (130), by its other end, is sealingly fixed to the interface piece (120), **in that** this said end of the bellows is sealingly closed off by the interface piece (120), **in that** the membrane (140) is sealingly fixed to one of the other housing faces by its external rim, **in that** said membrane (140), by its internal rim, is sealingly fixed to the interface piece (120), the space (150) in which the vacuum is formed being defined by the internal housing of the casing (110), the bellows (130), the interface piece (120) and the membrane (140).

3. A detector according to claim 1 or claim 2, **characterised in that** it is adapted to be disposed in the internal housing formed in a protection body (200), this internal housing being subjected to the second pressure.

4. A detector according to any one of the preceding claims, **characterised by** an elastic member (131) disposed in the internal volume of the bellows (130), in compression between the interface piece (120) and an element fixed with respect to the casing (110), the force exerted by the elastic member (131) limiting the detection threshold drifts, in terms of altitude.

5. A detector according to claim 4, **characterised by** adjustment shims (132) interposed between the elastic member (131) and the fixed element.

6. A detector according to claim 3 in combination with claim 4 or claim 5, **characterised in that** the fixed element is the protection body (200).

7. A detector according to any one of claims 3 to 6, **characterised in that** the protection body (200) has an internal connecting piece (210) engaged in the bellows (130), this internal connecting piece (210) having a through internal channel in which the first pressure prevails, said channel being connected to the internal volume of the bellows (130) and the casing (110) being fixed sealingly around the connecting piece (210) by a head (114).

8. A detector according to any one of the preceding claims in combination with claim 3, **characterised in that** the interface piece (120) has a blind internal housing (122) turned towards the internal housing of the protection body (200) and an annular collar (121) to which the internal rim of the membrane (140) is fixed sealingly, said membrane being fixed sealingly, by its external rim, to a base (112) of the casing (110).

9. A detector according to any one of the preceding claims, **characterised in that** the membrane (140) has an outside diameter greater than the diameter of the bellows (130).

10. A detector according to any one of the preceding claims, **characterised in that** it is provided with an actuator (160) triggered according to the position of the interface piece (120).

11. A detector according to claim 10, **characterised in that** said actuator (160) is a valve.

12. A detector according to claims 3 and 11, **characterised in that** the valve (160) comprises a seat (163) formed in a seat body (165) mounted sealingly in a housing (201) formed in one of the walls of the protection body (200) and an obturation element (161) mounted in the blind cylindrical housing (122) of the interface piece (120) between a shoulder on the latter and an annular stop (162) internal to the housing (122), **in that** the valve seat body (165) has a through axial bore (166) and **in that** the blind housing (201) is in communication relationship on the one hand with the axial bore (166) and in communication relationship with a second piercing (202) on the other hand, formed in one of the walls of the body (200) and emerging on one of the external faces of the latter.

13. A detector according to claim 12, **characterised in that** the obturation element (161) is mounted in the housing (122) of the interface piece (120) with an axial clearance along the axis (AA') and is urged towards the annular stop (162) by an elastic member (164).

14. A detector according to any one of the preceding claims in combination with claim 3, **characterised in that** the second pressure is atmospheric pressure.

## Patentansprüche

1. Detector für Absolutdruckverhältnis mit einem Gehäuse (110), **dadurch gekennzeichnet, dass** er ein in Längsrichtung bewegliches Schnittstellenstück (120) aufweist, das mit einem seiner Enden mit einer Membran (140) verbunden ist, welche ferner mit einem ihrer Enden mit dem Gehäuse verbunden ist, wobei das bewegliche Schnittstellenstück mit dem anderen Ende mit einem Balgen (130) verbunden ist, welcher ferner mit dem Gehäuse verbunden ist, wobei der Balgen (130) mit seinem Innenvolumen einen ersten Druck ausgesetzt ist und wobei die Membran (140) mit einer ihrer Flächen einem zweiten Druck ausgesetzt ist, und dass das Schnittstellenstück (120) und der Balgen (130) in einem Raum (150) von einem Vakuum umgeben sind, wobei der Raum von dem Gehäuse (110), dem Schnittstellenstück (120), der Membran (140) und dem Balgen (130) eingegrenzt wird.

2. Detektor nach Anspruch 1, **dadurch gekennzeichnet, dass** das Gehäuse (110) einen Innenraum aufweist, in dem der Balgen (130), das Schnittstellenstück (120) und die Membran (140) montiert sind, wobei der Balgen (130) über eines seiner Enden an einer der Seiten des Raumes angebracht ist, dass der Balgen (130) mit seinem anderen Ende an dem Schnittstellenstück (120) abgedichtet angebracht ist, so dass dieses Ende des Balgens durch das Schnittstellenstück (120) abgedichtet verschlossen wird, dass die Membran (140) an einer der anderen Seiten des Raumes mit ihrem äußeren Rand abgedichtet angebracht ist, dass die Membran (140) mit ihrem inneren Rand an dem Schnittstellenstück (120) abgedichtet angebracht ist, wobei der Raum (150), in dem das Vakuum gebildet wird, durch den Innenraum des Gehäuses (110), den Balgen (130), das Schnittstellenstück (120) und die Membran (140) eingegrenzt wird.

3. Detektor nach Anspruch 1 oder Anspruch 2, **dadurch gekennzeichnet, dass** er dazu eingerichtet ist, in dem in einem Schutzkörper (200) gebildeten Innenraum aufgenommen zu werden, wobei dieser Innenraum dem zweiten Druck ausgesetzt ist.

4. Detektor nach einem der vorangehenden Ansprüche, **gekennzeichnet durch** ein elastisches Element (131), das in dem Innenvolumen des Balgens (130) angeordnet ist und zwischen dem Schnittstellenstück (120) und einem im Verhältnis zu dem Gehäuse (110) feststehenden Element komprimiert werden kann, wobei die **durch** das elastische Element (131) ausgeübte Kraft die Verschiebungen der Erfassungsschwelle in Höhenrichtung begrenzt.

5. Detektor nach Anspruch 4, **gekennzeichnet durch** Einstellkeile (132), die zwischen das elastische Element (131) und das feststehende Element eingefügt sind.

6. Detektor nach Anspruch 3 in Kombination mit Anspruch 4 oder Anspruch 5, **dadurch gekennzeichnet, dass** das feststehende Element der Schutzkörper (200) ist.

7. Detektor nach einem der Ansprüche 3 bis 6, **dadurch gekennzeichnet, dass** der Schutzkörper (200) ein inneres Ansatzstück (210) in Eingriff mit dem Balgen (130) aufweist, wobei dieses innere Ansatzstück (210) einen inneren Durchgangskanal aufweist, in dem der ersten Druck herrscht, wobei der Kanal mit dem Innenvolumen des Balgens (130) in Verbindung ist und das Gehäuse (110) über einen Kopf (114) um das Ansatzstück (210) herum abgedichtet angebracht ist.

8. Detektor nach einem der vorangehenden Ansprüche, in Kombination mit Anspruch 3, **dadurch gekennzeichnet, dass** das Schnittstellenstück (120) einen inneren Blindraum (122) aufweist, der in Richtung des Innenraumes des Schutzkörpers (200) gewandt ist, sowie einen ringförmigen Kranz (121), an dem der innere Rand der Membran (120) abgedichtet angebracht ist, wobei die Membran mit ihrem äußeren Rand an einem Sockel (112) des Gehäuses (110) abgedichtet angebracht ist.

9. Detektor nach einem der vorangehenden Ansprüche, **dadurch gekennzeichnet, dass** die Membran (140) einen Außendurchmesser hat, der größer ist als der Durchmesser des Balgens (130).

10. Detektor nach einem der vorangehenden Ansprüche, **dadurch gekennzeichnet, dass** er mit einem Stellglied (160) versehen ist, das als Funktion der Position des Schnittstellenstücks (120) ausgelöst wird.

11. Detektor nach Anspruch 10, **dadurch gekennzeichnet, dass** das Stellglied (160) eine Klappe ist.

12. Detektor nach den Ansprüchen 3 und 11, **dadurch gekennzeichnet, dass** die Klappe (160) einen Sitz (130) aufweist, der in einem Sitzkörper (165) ausgebildet ist, welcher in einem in einer Wand des Schutzkörpers (200) gebildeten Raum abgedichtet angebracht ist, und ein Verschlusselement (161) in dem zylindrischen Blindraum (122) des Schnittstellenstücks (120) zwischen einem Vorsprung des Letzteren und einem ringförmigen Anschlag (162) in dem Raum (122) angebracht ist, dass der Sitzkörper (165) der Klappe eine axiale Durchgangsbohrung (166) aufweist und dass der Blindraum (201) in Verbindung einerseits mit der axialen Durchgangsbohrung (166) und in Verbindung andererseits mit einer zweiten Bohrung (202) ist, die in einer der Wände des Körpers (200) ausgebildet ist und in einer der Außenseiten des Selbigen mündet.

13. Detektor nach Anspruch 12, **dadurch gekennzeichnet, dass** das Verschlusselement (161) in dem Raum (122) des Schnittstellenstücks (120) mit axialem Spiel entlang der Achse (AA') montiert und über ein elastisches Element (164) in Richtung des ringförmigen Anschlags (162) vorgespannt ist.

14. Detektor nach einem der vorangehenden Ansprüche in Kombination mit Anspruch 3, **dadurch gekennzeichnet, dass** der zweite Druck der Umgebungsdruck ist.
